# EUROPEAN PATENT APPLICATION

(11) **EP 4 708 467 A1**
(43) Date of publication of application: **11.03.2026**
(21) Application number: 24856810.7
(22) Date of filing: 21.08.2024
(51) Int. Cl.: H01M 50/102, H01M 50/547, H01M 50/116, H01M 50/155, H01M 50/169, H01M 50/174

(54) **SECONDARY BATTERY**

(30) Priority: 21.08.2023 KR 20230109210; 20.08.2024 KR 20240111561
(71) Applicant: LG Energy Solution, Ltd., Seoul 07335 (KR)
(72) Inventor: KIM, Sang Hun, Daejeon 34122 (KR); CHOI, Ji Eun, Daejeon 34122 (KR); LEE, Jae Ho, Daejeon 34122 (KR); LEE, Ji Sun, Daejeon 34122 (KR); YU, Hyung Kyun, Daejeon 34122 (KR)
(74) Representative: Goddar, Heinz J.
(86) International application number: PCT/KR2024/012436
(87) International publication number: WO 2025/042199

(57) **Abstract**

A secondary battery according to an embodiment of the present disclosure may include an electrode assembly, a support frame surrounding a part of the electrode assembly, a sheet-type outer packaging material surrounding a remaining part of the electrode assembly to form an accommodation space accommodating the electrode assembly together with the support frame, and coupled to the support frame to define the accommodation space separated from outside of the support frame, and an electrode terminal electrically connected to an electrode tab of the electrode assembly, and disposed in the sheet-type outer packaging material such that it is exposed to outside of the sheet-type outer packaging material.

## Description

### TECHNICAL FIELD

### CROSS-REFERENCE TO RELATED APPLICATIONS

The present application claims priority to Korean Patent Application No. 10-2023-0109210 filed on August 21, 2023 and Korean Patent Application No. 10-2024-0111561 filed on August 20, 2024 in the Republic of Korea, the disclosures of which are incorporated herein by reference.

### TECHNICAL FIELD

Embodiments of the present disclosure relate to a secondary battery.

### BACKGROUND ART

In general, as opposed to primary batteries that cannot be recharged, secondary batteries refer to rechargeable batteries, and are widely used in electronic devices including mobile phones, notebook computers and camcorders or electric vehicles.

Secondary batteries may be classified into cylindrical or prismatic batteries in which an electrode assembly is included in a cylindrical or prismatic metal can, and pouch-type batteries in which an electrode assembly is included in a pouch-type case of a laminate sheet, according to the shape of a battery case.

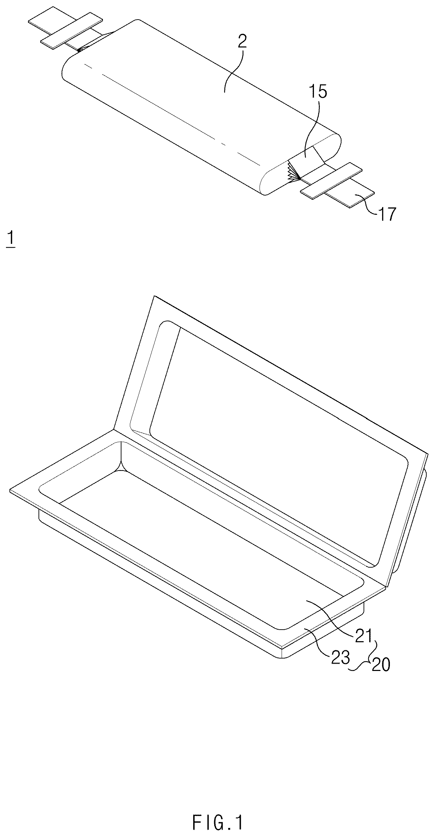

FIG. 1 is a diagram showing an example of a pouch-type secondary battery. The pouch-type secondary battery (a pouch-type cell) 1 includes an electrode assembly 2 including an electrode and a separator stacked in an alternating manner, and a pouch-type outer packaging material 20 accommodating the electrode assembly 2. Each of the electrodes of the electrode assembly 2 may be connected to each of electrode tabs 15. The electrode tabs 15 may be welded to each other at a predetermined area and then connected to an electrode lead 17 by welding. The outer packaging material 20 includes an accommodation portion (a cup portion) 21 to accommodate the electrode assembly 2. The accommodation portion 21 of the outer packaging material 20 may include one or two recessed shape portions. FIG. 1 shows the accommodation portion 21 including two recessed shape portions. The outer packaging material 20 may be manufactured through forming of a pouch film. A sealing portion 23 is formed around the accommodation portion 21 by sealing.

Meanwhile, the forming depth of the cup portion formed in the pouch film is limited according to the material characteristics of the pouch film. Accordingly, it is difficult to form the cup portion sufficiently deeply to increase battery capacity, and there are limitations in selecting the material or thickness of the pouch film. During the forming of the cup portion, as the thickness of the pouch film becomes smaller, defects such as cracks may easily occur in the outer packaging material.

### SUMMARY

### TECHNICAL PROBLEM

Embodiments of the present disclosure are directed to providing a secondary battery capable of solving the problems that occur in a process of forming a cup portion for accommodating an electrode assembly.

### TECHNICAL SOLUTION

In an example, a secondary battery may include an electrode assembly, a support frame surrounding a part of the electrode assembly, a sheet-type outer packaging material surrounding a remaining part of the electrode assembly to form an accommodation space accommodating the electrode assembly together with the support frame, and coupled to the support frame to define the accommodation space from outside of the support frame, and an electrode terminal electrically connected to an electrode tab of the electrode assembly, and disposed in the sheet-type outer packaging material such that it is exposed to outside of the sheet-type outer packaging material.

In another example, when a direction in which electrodes of the electrode assembly are stacked is a height direction, and a direction perpendicular to the height direction is a side direction, the support frame may include a support sidewall having an upper opening along the height direction, and surrounding all sides of the electrode assembly defined along the side direction, and the sheet-type outer packaging material may include an outer packaging sheet coupled to an upper surface of the support sidewall defined along the height direction, to cover the upper opening formed by the support sidewall.

In another example, when a direction in which electrodes of the electrode assembly are stacked is a height direction, and a direction perpendicular to the height direction is a side direction, the support frame may include a support sidewall formed in a C shape that forms an upper opening along the height direction and a side opening along the side direction, and surrounding some of sides of the electrode assembly defined along the side direction, and the sheet-type outer packaging material may include an outer packaging sheet coupled to the support sidewall, and covering the upper opening and the side opening formed by the support sidewall.

In another example, the support frame may be formed from a plastic material, and the sheet-type outer packaging material may include a metal layer, and a resin layer disposed on an inner surface of the metal layer and bonded to the support frame.

In another example, the support frame may be formed from a metal material, and the sheet-type outer packaging material may include a metal layer, and a resin layer disposed on an inner surface of the metal layer and coupled to the support frame.

In another example, a surface of the support frame coupled with the sheet-type outer packaging material may be surface-treated to improve coupling with the sheet-type outer packaging material.

In another example, the support frame may be formed from a metal material, and the sheet-type outer packaging material may include a metal layer coupled to the support frame by welding.

In another example, the secondary battery may further include an adhesive disposed between the support frame and the sheet-type outer packaging material to stick the support frame and the sheet-type outer packaging material together.

In another example, the electrode terminal may include a terminal metal layer which is a part of a metal layer of the sheet-type outer packaging material, and having an inner surface exposed to inside of the accommodation space and electrically connected to the electrode tab, and an outer surface exposed to outside of the sheet-type outer packaging material.

In another example, the terminal metal layer may be disposed on a surface of the sheet-type outer packaging material covering an upper surface or a lower surface of the electrode assembly defined along a height direction which is a direction in which electrodes of the electrode assembly are stacked, and may not overlap the electrode assembly when projected in the height direction.

In another example, the sheet-type outer packaging material may include the metal layer, and a resin layer covering at least one surface of the inner surface or the outer surface of the metal layer, but not covering the terminal metal layer.

In another example, the electrode terminal may include a terminal metal layer which is a part of a metal layer of the sheet-type outer packaging material, and having an inner surface exposed to inside of the accommodation space and electrically connected to the electrode tab, and an exposure member electrically connected to the terminal metal layer, disposed on an outer surface of the terminal metal layer and exposed to outside of the sheet-type outer packaging material.

In another example, the sheet-type outer packaging material may include the metal layer, and a resin layer covering the outer surface of the metal layer, but not covering the terminal metal layer to form an exposure hole through which the terminal metal layer is exposed to the outside of the sheet-type outer packaging material, and the exposure member may include a connection portion disposed at the exposure hole and electrically connected to the terminal metal layer, and an extension portion extended from the connection portion in parallel to the sheet-type outer packaging material outside of the sheet-type outer packaging material, and overlapping the resin layer surrounding the exposure hole.

In another example, the sheet-type outer packaging material may include an exposure hole through which the accommodation space is exposed to outside of the sheet-type outer packaging material, and the electrode terminal may include an exposure member passing through the exposure hole, and having an end portion exposed to inside of the accommodation space and electrically connected to the electrode tab, and an opposite end portion exposed to outside of the sheet-type outer packaging material.

In another example, the exposure member may include a body portion extended in a direction perpendicular to the sheet-type outer packaging material and disposed at the exposure hole, an inner extension portion extended from an inner end portion located inside of the sheet-type outer packaging material among two end portions of the body portion to outside of the exposure hole in parallel to the sheet-type outer packaging material, and an outer extension portion extended from an outer end portion located outside of the sheet-type outer packaging material among the two end portions of the body portion to outside of the exposure hole in parallel to the sheet-type outer packaging material.

In another example, a sealant layer may be disposed in at least one of between the inner extension portion and an inner surface of the sheet-type outer packaging material facing the inner extension portion, and between the outer extension portion and an outer surface of the sheet-type outer packaging material facing the outer extension portion.

In another example, the exposure member may include an inner body portion, at least part of which is exposed to the inside of the accommodation space, and an outer body portion separately formed from the inner body portion and separably coupled to the inner body portion, wherein at least part of the outer body portion may be exposed to the outside of the sheet-type outer packaging material.

In another example, the electrode assembly may include a first electrode assembly, and a second electrode assembly stacked on the first electrode assembly, and a first electrode tab of the first electrode assembly and a second electrode tab of the second electrode assembly having a same polarity as the first electrode tab may be spaced apart from each other and coupled to the electrode terminal.

### ADVANTAGEOUS EFFECTS

According to an embodiment of the present disclosure, the sheet-type outer packaging material may eliminate the need for the forming of the cup portion for accommodating the electrode assembly, so it may be possible to easily increase battery capacity through the increased size of the support frame, select the material or thickness of the sheet-type outer packaging material relatively freely, and prevent defects such as cracks.

Additionally, according to an embodiment of the present disclosure, when projecting the secondary battery in the direction in which the electrodes of the electrode assembly are stacked, the electrode terminal is not extended to the outside of the support frame, thereby minimizing installation volume of the secondary battery, leading to improved volumetric energy density of the secondary battery.

Furthermore, according to an embodiment of the present disclosure, a planar contact may be made between the support frame and the sheet-type outer packaging material, so the support frame and the sheet-type outer packaging material may be strongly coupled all over the area.

### BRIEF DESCRIPTION OF THE DRAWINGS

FIG. 1 is a diagram showing an example of a pouch-type secondary battery.
FIG. 2 is a perspective view showing a secondary battery according to Embodiment 1 of the present disclosure.
FIG. 3 is an exploded perspective view of the secondary battery of FIG. 2.
FIG. 4 is a cross-sectional view showing a stack structure of a sheet-type outer packaging material of the secondary battery of FIG. 2.
FIG. 5 is a perspective view showing another type of secondary battery compared to the secondary battery of FIG. 2.
FIG. 6 is a cross-sectional view showing a variation of the stack structure of the sheet-type outer packaging material of FIG. 4.
FIG. 7 is a cross-sectional view of the secondary battery of FIG. 2, taken along the line A-A.
FIG. 8 is a cross-sectional view showing a first variation of the secondary battery of FIG. 2.
FIG. 9 is a cross-sectional view showing a second variation of the secondary battery of FIG. 2.
FIG. 10 is a perspective view showing a third variation of the secondary battery of FIG. 2.
FIG. 11 is an exploded perspective view showing a secondary battery according to Embodiment 2 of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

### Embodiment 1

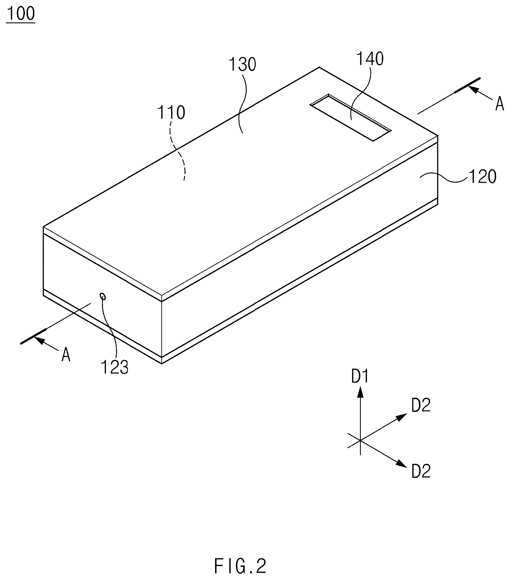

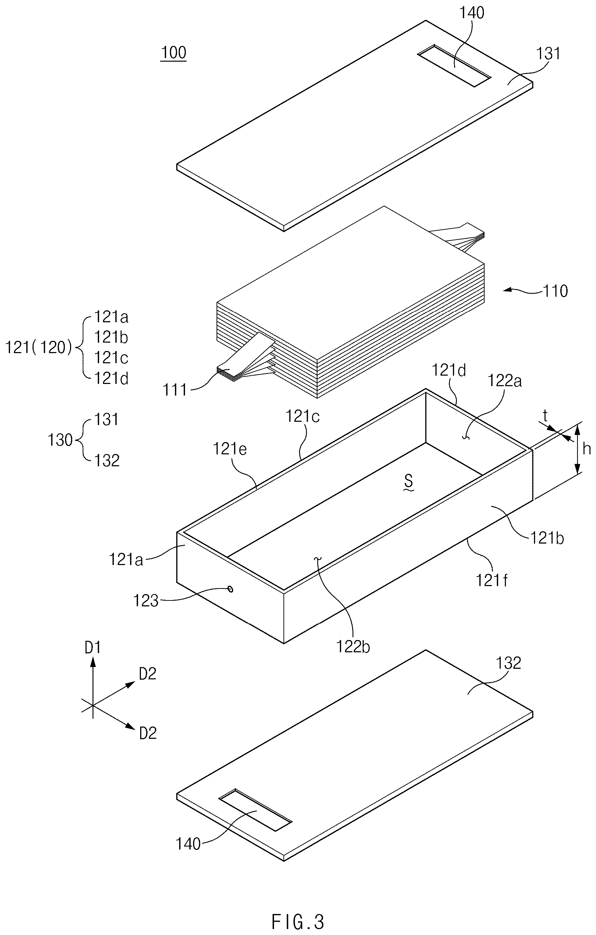

FIG. 2 is a perspective view showing a secondary battery 100 according to Embodiment 1 of the present disclosure, and FIG. 3 is an exploded perspective view of the secondary battery 100 of FIG. 2. As shown in FIGS. 2 and 3, the secondary battery 100 according to Embodiment 1 of the present disclosure may include an electrode assembly 110, a support frame 120, a sheet-type outer packaging material 130 and an electrode terminal 140. Hereinafter, the secondary battery 100 of this embodiment will be described based on FIG. 3. For reference, the description of Embodiment 1 may be equally applied to the following embodiment so long as there is no contradiction between them.

### Electrode assembly

The electrode assembly 110 may be formed by stacking an electrode and a separator in an alternating manner. The electrode may include a positive electrode and a negative electrode. The electrode assembly 110 may have an electrode tab 111 connected to the electrode. The electrode tab 111 may be separately formed, and may be a part of a current collector of the electrode. For reference, in the case of an all-solid-state-battery, the electrode assembly 110 may include a solid electrolyte instead of the separator.

### Support frame

The support frame 120 may be configured to support the structure of the secondary battery 100 according to this embodiment. To this end, the support frame 120 may have higher stiffness than the sheet-type outer packaging material 130 described below.

The support frame 120 may surround a part of the electrode assembly 110. FIG. 3 shows the support frame 120 that surrounds the sides of the electrode assembly 110. The remaining part of the electrode assembly 110 such as an upper surface and a lower surface may be surrounded by the sheet-type outer packaging material 130. Here, the upper surface and the lower surface of the electrode assembly 110 may be defined along a height direction D1 or a direction in which the electrodes of the electrode assembly 110 are stacked. The sides of the electrode assembly 110 may be defined along a side direction D2 or a direction perpendicular to the height direction D1. The side direction D2 may refer to a plurality of directions perpendicular to the height direction D1.

The support frame 120 may include a support sidewall 121. The support sidewall 121 may be a member having a predetermined thickness (t) along the side direction D2 and a predetermined height (h) along the height direction D1. The support sidewall 121 may include four sidewalls 121a, 121b, 121c, 121d, and have an upper opening 122a at the upper side and a lower opening 122b at the lower side in the height direction D1. Additionally, the support sidewall 121 may surround all the sides of the electrode assembly 110. The support sidewall 121 may be formed in the shape of a frame, and surround all the sides of the electrode assembly 110 except the upper surface and the lower surface of the electrode assembly 110.

However, the shape of the support frame 120 is not limited to the above-described shape. For example, the support frame 120 may further include a support side plate (not shown) that covers the lower opening 122b. That is, the support frame 120 may be formed in such a shape that the support frame 120 only has the upper opening 122a. Alternatively, the support sidewall 121 of the support frame 120 may be formed in the shape of a curve, not a straight line as shown in FIG. 3. For reference, the terms upper and lower, or left and right as used herein are relative terms that may change depending on the viewing direction.

Meanwhile, the support frame 120 may include an electrolyte solution injection hole 123 for injecting an electrolyte solution into an accommodation space S as described below. Through this, after the electrolyte solution injection process and activation, a degassing process may be performed. For example, in a state that the secondary battery 100 is disposed such that one surface 121a of the support frame 120 having the electrolyte solution injection hole 123 faces upwards, the electrolyte solution may be injected into the accommodation space S through the electrolyte solution injection hole 123. In the degassing process, gas venting may be guided through the electrolyte solution injection hole 123 in open state. After the electrolyte solution injection and degassing, the electrolyte solution injection hole 123 may be closed by sealing or welding. Alternatively, an opening and closing valve (not shown) may be installed at the electrolyte solution injection hole 123 to open the electrolyte solution injection hole 123 when necessary.

The conventional pouch-type outer packaging material has a receiving portion accommodating the electrode assembly 110 and a pocket portion that contains gas generated during activation, and after gas venting of the pocket portion through the degassing process, the pocket portion is removed. Thus, a part of the pouch-type outer packaging material is always wasted. However, when the electrolyte solution injection hole 123 is present, the electrolyte solution injection and degassing can be performed through the electrolyte solution injection hole 123, thereby preventing the wastage of the outer packaging material.

### Sheet-type outer packaging material

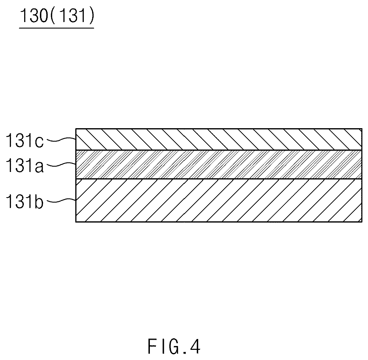

As shown in FIG. 4, the sheet-type outer packaging material 130 may be a sheet including a metal layer 131a. FIG. 4 is a cross-sectional view showing the stack structure of the sheet-type outer packaging material 130 of the secondary battery 100 of FIG. 2. The metal layer 131a may include a layer of aluminum or a layer of stainless steel.

The sheet-type outer packaging material 130 may be a laminate sheet further including a resin layer stacked on the metal layer 131a. The sheet-type outer packaging material 130 may include a first resin layer 131b disposed on the inner surface of the metal layer 131a. The first resin layer 131b may be a layer of polypropylene (PP). The first resin layer 131b may require high insulation and corrosion resistance, and the first resin layer 131b may be formed from any other resin that meets the requirements. The sheet-type outer packaging material 130 may include a second resin layer 131c disposed on the outer surface of the metal layer 131a. The second resin layer 131c may be a layer of polyethylene terephthalate (PET). The second resin layer 131c may require protection and insulation of the secondary battery 100, and the second resin layer 131c may be formed from any other resin that meet the requirements.

As shown in FIG. 3, the sheet-type outer packaging material 130 may surround the remaining part of the electrode assembly 110 that is not surrounded by the support frame 120 to form the accommodation space S accommodating the electrode assembly 110 together with the support frame 120. FIG. 3 shows two outer packaging sheets 131, 132 respectively covering the upper opening 122a and the lower opening 122b formed by the support frame 120 in order to surround the upper surface and the lower surface of the electrode assembly 110 that is not surrounded by the support frame 120. The outer packaging sheets 131, 132 may be outer films. As described above, the sheet-type outer packaging material 130 may include the two outer packaging sheets 131, 132 respectively covering the upper opening 122a and the lower opening 122b of the support frame 120. When the support frame 120 forms only one of the upper opening 122a and the lower opening 122b, the sheet-type outer packaging material 130 may include only one outer packaging sheet accordingly. The outer packaging sheets 131, 132 may include the metal layer 131a, or may include the metal layer 131a and the resin layer 131b, 131c.

The sheet-type outer packaging material 130 may be coupled to the support frame 120 to define the accommodation space S accommodating the electrode assembly 110 from the outside of the secondary battery 100. For example, when the electrode assembly 110 is disposed at the inside of the support frame 120 and the sheet-type outer packaging material 130 is coupled to the support frame 120 to cover the upper opening 122a and the lower opening 122b of the support frame 120, the accommodation space S accommodating the electrode assembly 110 may be separated from the outside of the secondary battery 100. When the electrolyte solution is filled in the accommodation space S, the sheet-type outer packaging material 130 may be coupled to the support frame 120 to form a seal. Through this, it may be possible to prevent leakage of the electrolyte solution.

Meanwhile, conventionally, the cup portion for accommodating the electrode assembly is formed in the outer packaging sheet and the cup portion is sealed with another outer packaging sheet, to receive the electrode assembly in the pouch-type outer packaging material (see FIG. 1). However, because the forming depth of the cup portion is limited according to the material characteristics of the pouch-type outer packaging material, it is difficult to form the cup portion sufficiently deeply to increase battery capacity, and there are limitations in selecting the material or thickness of the pouch-type outer packaging material. Additionally, during the forming of the cup portion, as the thickness of the pouch-type outer packaging material becomes smaller, defects such as cracks easily occur in the pouch-type outer packaging material.

In contrast, in the case of the secondary battery 100 of this embodiment, the electrode assembly 110 may be received in a way that the electrode assembly 110 is placed in the support frame 120, and the openings 122a, 122b of the support frame 120 are covered with the sheet-type outer packaging material 130 that does not require the forming of the cup portion, so the above-described limitations or defects may not occur. Accordingly, it may be possible to easily increase battery capacity through the increased size of the support frame 120, select the material or thickness of the sheet-type outer packaging material 130 relatively freely, and prevent defects such as cracks.

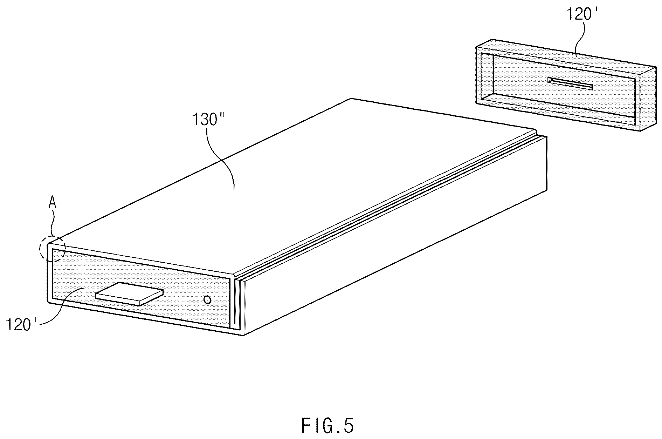

As the battery using the sheet-type outer packaging material 130 that does not require the forming of the cup portion, a battery shown in FIG. 5, i.e., a battery including a cover member 120' and a sheet-type outer packaging material 130" may be considered. FIG. 5 is a perspective view showing another type of secondary battery compared to the secondary battery 100 of FIG. 2. In the battery of FIG. 5, the sheet-type outer packaging material 130" may be rolled or folded multiple times to form an internal space accommodating the electrode assembly 110, and an outer packaging material opening that communicates the internal space with the outside. The cover member 120' may be a member that covers the outer packaging material opening of the sheet-type outer packaging material 130" to form a seal.

In the case of such a battery, it is necessary to couple the sheet-type outer packaging material 130" to the cover member 120' along the periphery of the cover member 120'. To this end, it may be necessary to apply pressure to the sheet-type outer packaging material 130" toward the cover member 120'. However, because it is not easy to apply pressure to the sheet-type outer packaging material 130" toward the corner A of the cover member 120', coupling between the cover member 120' and the sheet-type outer packaging material 130'' may be weak at the corner A of the cover member 120'. The weak coupling may degrade sealability, causing leakage of the electrolyte solution when the electrolyte solution is filled in the battery.

In contrast, the secondary battery 100 of this embodiment may have strong coupling between the support frame 120 and the sheet-type outer packaging material 130. As shown in FIG. 3, the outer packaging sheet 131, 132 of this embodiment may be coupled to an upper surface 121e or a lower surface 121f of the support sidewall 121. The outer packaging sheet 131, 132 and the upper surface 121e or the lower surface 121f of the support sidewall 121 facing the outer packaging sheet 131, 132 may be brought into planar contact with each other, thereby uniformly applying pressure to the outer packaging sheet 131, 132 all over the upper surface 121e or the lower surface 121f of the support sidewall 121. Through this, strong coupling may be formed between the outer packaging sheet 131, 132 and the support sidewall 121. For reference, the upper surface 121e or the lower surface 121f of the support sidewall 121 may be one surface of the support sidewall 121 defined along the height direction D1 or the opposite direction.

### Coupling of support frame and sheet-type outer packaging material

The support frame 120 may be formed from a plastic material. As shown in FIG. 4, the sheet-type outer packaging material 130 may include the metal layer 131a and the resin layer 131b disposed on the inner surface of the metal layer 131a. In this instance, the support frame 120 and the resin layer 131b of the sheet-type outer packaging material 130 may be coupled through thermal bonding. The resin layer 131b may be a layer of polypropylene (PP). The portion of the support frame 120 coupled to the sheet-type outer packaging material 130 may have a sealant layer (not shown) to improve the coupling with the sheet-type outer packaging material 130. The sealant layer may be a layer of polypropylene (PP).

The support frame 120 may be formed from a metal material. The sheet-type outer packaging material 130 may include the metal layer 131a and the resin layer 131b disposed on the inner surface of the metal layer 131a. The sheet-type outer packaging material 130 may be coupled to the support frame 120 through thermal bonding. One surface of the support frame 120 coupled to the sheet-type outer packaging material 130 may be surface-treated to improve the coupling with the sheet-type outer packaging material 130. For example, chemical coating such as chromate coating may be applied to one surface of the support frame 120. Alternatively, the support frame 120 may be microtextured on one surface. The resin layer 131b of the sheet-type outer packaging material 130 may be a layer of polyphthalamide (PPA) with the ability to bond to metal. The portion of the support frame 120 coupled to the sheet-type outer packaging material 130 may have the sealant layer (not shown). The sealant layer may be a layer of polypropylene (PP). The support frame 120 may be formed of the metal frame, or may have the sealant layer coated or applied on the metal frame. The support frame 120 may have a multilayer structure including the metal layer and the sealant layer stacked on the metal layer. The metal frame or the metal layer may be effective in preventing moisture from coming in from outside.

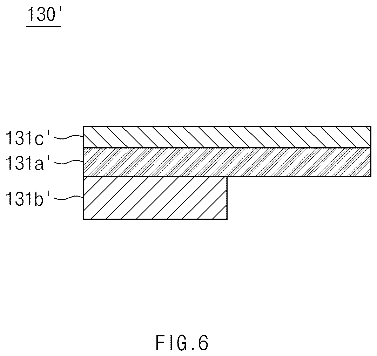

The support frame 120 made of metal may be coupled to the sheet-type outer packaging material 130' by welding. To this end, as shown in FIG. 6, the sheet-type outer packaging material 130' may include the metal layer 131a' coupled to the support frame 120 by welding. FIG. 6 is a cross-sectional view showing a variation of the stack structure of the sheet-type outer packaging material 130 of FIG. 4. In this instance, the metal layer 131a' may include a layer of stainless steel. In the case where the resin layer 131b' on the inner surface of the metal layer 131a' is a hindrance in welding, as shown in FIG. 6, the resin layer 131b' formed at the coupled portion with the support frame 120 may be removed, or the resin layer 131b' may not be formed at the corresponding portion. Alternatively, the resin layer may not be formed over the entire inner surface of the metal layer 131a'.

To improve the coupling between the support frame 120 and the sheet-type outer packaging material 130, an adhesive (not shown) may be provided to stick the support frame 120 and the sheet-type outer packaging material 130 together.

### Electrode terminal

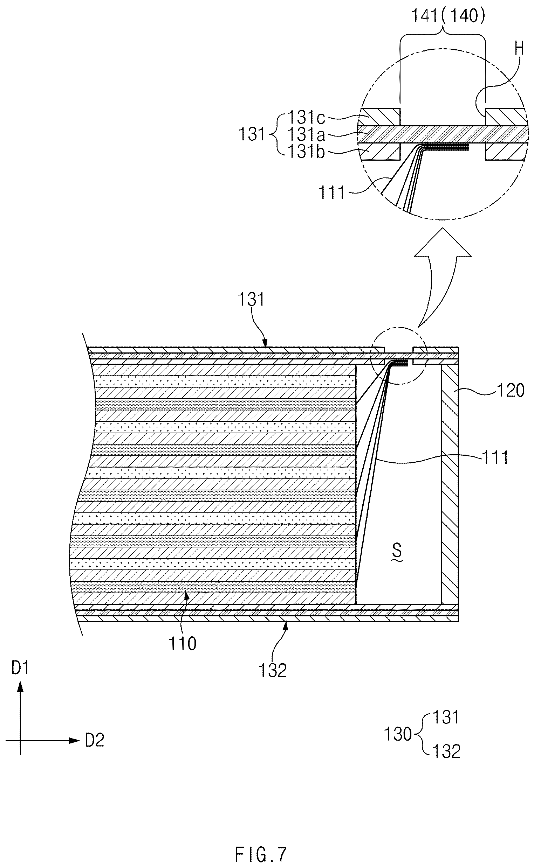

The electrode terminal 140 may be a member for electrical connection with other device. To this end, the electrode terminal 140 may be made of an electrically conductive material. As shown in FIGS. 3 and 7, the electrode terminal 140 may be disposed in the sheet-type outer packaging material 130 such that it is exposed to the outside of the sheet-type outer packaging material 130; 131, 132. A part of the electrode terminal 140 may be exposed to the outside of the sheet-type outer packaging material 130. As shown in FIG. 7, the electrode terminal 140 may be electrically connected to the electrode tab 111 of the electrode assembly 110. The electrical connection may include direct connection and indirect connection by the medium of other electrically conductive member. The electrode tabs 111 may be welded to each other at a predetermined area and then connected to the electrode terminal 140 by welding. FIG. 7 is a cross-sectional view of the secondary battery 100 of FIG. 2, taken along the line A-A. The electrode terminal 140 may include a positive electrode terminal connected to the positive electrode tab of the electrode assembly 110, and a negative electrode terminal connected to the negative electrode tab of the electrode assembly 110.

Because the electrode terminal 140 of this embodiment is disposed in the sheet-type outer packaging material 130; 131, 132, volumetric energy density of the battery may be improved. When the secondary battery 100 is projected in the height direction D1 or the direction in which the electrodes of the electrode assembly 110 are stacked, in the case where the electrode terminal 140 is extended to the outside of the support frame 120, the installation volume required for the installation of the secondary battery 100 may increase. In the case of the secondary battery 100 of this embodiment, when the secondary battery 100 is projected in the direction in which the electrodes of the electrode assembly 110 are stacked, the electrode terminal 140 is not extended to the outside of the support frame 120, thereby minimizing the installation volume of the secondary battery 100.

Meanwhile, as shown in FIG. 7, the electrode terminal 140 may include a terminal metal layer 141 electrically connected to the electrode tab 111. The terminal metal layer 141 may be a part of the metal layer 131a of the sheet-type outer packaging material 130. The metal layer 131a of the sheet-type outer packaging material 130 may be an electrically conductive metal layer, for example, a layer of aluminum.

The sheet-type outer packaging material 130 may include the first resin layer 131b disposed on the inner surface of the metal layer 131a. The first resin layer 131b may cover at least part of the inner surface of the metal layer 131a. However, the first resin layer 131b may not cover the terminal metal layer 141. Accordingly, the terminal metal layer 141 may be exposed to the inside of the accommodation space S on the inner surface of the terminal metal layer 141. The terminal metal layer 141 may be electrically connected to the electrode tab 111 through the exposed part. When the sheet-type outer packaging material does not include the first resin layer 131b, a part of the metal layer of the sheet-type outer packaging material may be selected and connected to the electrode tab 111.

The sheet-type outer packaging material 130 may include the second resin layer 131c disposed on the outer surface of the metal layer 131a. The second resin layer 131c may cover at least part of the outer surface of the metal layer 131a. However, the second resin layer 131c may not cover the terminal metal layer 141. Accordingly, the terminal metal layer 141 may be exposed to the outside of the sheet-type outer packaging material 130 on the outer surface of the terminal metal layer 141. The terminal metal layer 141 may be electrically connected to other device through the exposed part.

Meanwhile, a part of the metal layer 131a of the sheet-type outer packaging material 130 other than the terminal metal layer 141 may not be exposed to the outside of the sheet-type outer packaging material 130. For example, a part of the metal layer 131a that may be exposed to the outside of the sheet-type outer packaging material 130 (for example, a part located at the rightmost side in FIG. 7) may be covered by other insulating member.

The terminal metal layer 141 may be disposed on one surface of the sheet-type outer packaging material 130 covering the upper surface or the lower surface of the electrode assembly 110. FIG. 7 shows the terminal metal layer 141 disposed in the sheet-type outer packaging material 130 covering the upper surface of the electrode assembly 110. The upper surface and the lower surface of the electrode assembly 110 may be defined along the height direction D1 or the direction in which the electrodes of the electrode assembly 110 are stacked. The terminal metal layer 141 may not overlap the electrode assembly 110 when projected in the height direction D1. FIG. 7 shows the terminal metal layer 141 that is disposed corresponding to a space between the electrode assembly 110 and the support frame 120 and does not overlap the electrode assembly 110.

As shown in FIG. 3, the electrode tab, to be specific, the positive electrode tab and the negative electrode tab may be connected to the electrode terminal 140 of the upper outer packaging material 131 and the electrode terminal 140 of the lower outer packaging material 132, respectively. For example, in FIG. 3, the right tab connected to the electrode terminal 140 of the upper outer packaging material 131 may be seen as the positive electrode tab, and the left tab connected to the electrode terminal 140 of the lower outer packaging material 132 may be seen as the negative electrode tab. For this electrical connection, the electrode terminal 140 of the upper outer packaging material 131 and the electrode terminal 140 of the lower outer packaging material 132 may not be electrically connected to each other.

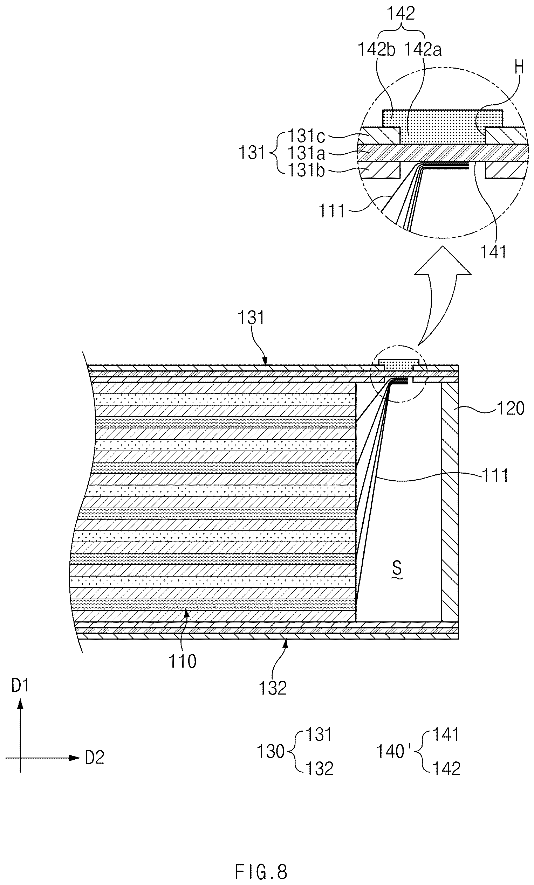

Meanwhile, the electrode terminal 140 may be modified as shown in FIG. 8. FIG. 8 is a cross-sectional view showing a first variation of the secondary battery 100 of FIG. 2.

The electrode terminal 140' may include the terminal metal layer 141 that is a part of the metal layer 131a of the sheet-type outer packaging material 130. The terminal metal layer 141 may be exposed to the inside of the accommodation space S and electrically connected to the electrode tab 111 on the inner surface of the terminal metal layer 141.

The electrode terminal 140' may include an exposure member 142 disposed on the outer surface of the terminal metal layer 141 and exposed to the outside of the sheet-type outer packaging material 130. The exposure member 142 may be electrically connected to the terminal metal layer 141. For example, an end portion of the exposure member 142 may be welded to the outer surface of the terminal metal layer 141. The exposure member 142 may be protruded further than the terminal metal layer 141 in the outward direction of the sheet-type outer packaging material 130, making it easy to establish an electrical connection with other device. The exposure member 142 may be disposed corresponding to all or part of the outer surface of the terminal metal layer 141.

Describing the sheet-type outer packaging material 130, the sheet-type outer packaging material 130 may include the metal layer 131a and the resin layer 131c covering the outer surface of the metal layer 131a. The resin layer 131c may not cover the terminal metal layer 141 to expose the terminal metal layer 141 that is a part of the metal layer 131a to the outside of the sheet-type outer packaging material 130. As described above, an exposure hole H that runs through the resin layer 131c may be formed at an area of the resin layer 131c that does not cover the terminal metal layer 141. The terminal metal layer 141 may be exposed to the outside of the sheet-type outer packaging material 130 through the exposure hole H of the sheet-type outer packaging material 130.

Describing the exposure member 142, the exposure member 142 may include a connection portion 142a disposed at the exposure hole H and electrically connected to the terminal metal layer 141. The connection portion 142a may conform to the shape of the exposure hole H so that the connection portion 142a may be disposed in the exposure hole H or may be formed in any shape such that the connection portion 142a may be disposed in the exposure hole H.

The exposure member 142 may include an extension portion 142b extended from the connection portion 142a. The extension portion 142b may be extended parallel to the sheet-type outer packaging material 130 (for example, in the left-right direction in FIG. 8) outside of the sheet-type outer packaging material 130. The term parallel as used herein may include generally parallel. The extension portion 142b extended as described above may overlap the resin layer 131c surrounding the exposure hole H, outside of the sheet-type outer packaging material 130. For example, when projected in a direction perpendicular to the sheet-type outer packaging material 130 (in FIG. 8, the same as the direction in which the electrodes of the electrode assembly are stacked), the extension portion 142b may overlap the resin layer 131c outside of the sheet-type outer packaging material 130. It may be possible to suppress infiltration of liquid into the secondary battery 100 from the outside of the secondary battery 100 through the exposure hole H. To improve this effect, the extension portion 142b may fully cover the resin layer 131c located along the periphery of the exposure hole H. FIG. 8 shows the extension portion 142b extended from the outer end of the connection portion 142a in parallel to the sheet-type outer packaging material 130.

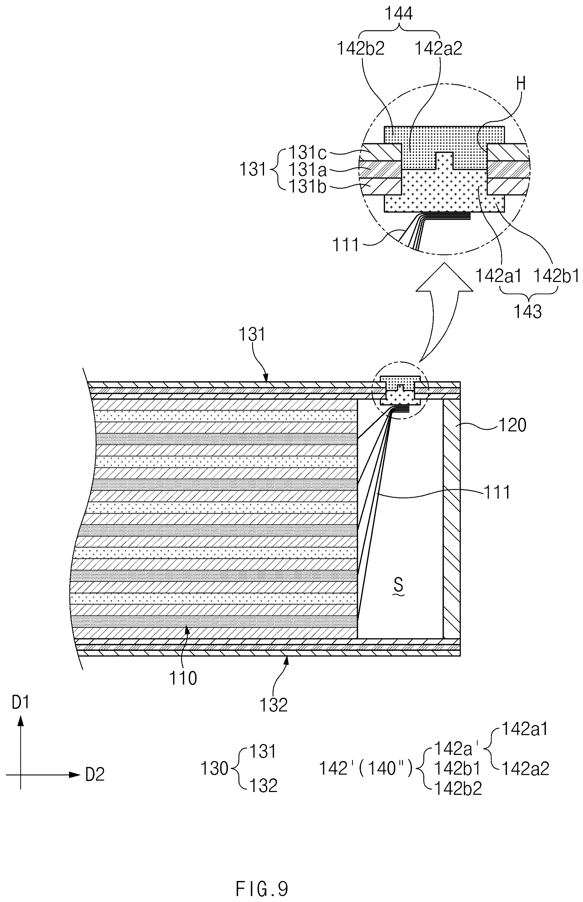

Meanwhile, the electrode terminal 140 may be modified as shown in FIG. 9. FIG. 9 is a cross-sectional view showing a second variation of the secondary battery 100 of FIG. 2.

The electrode terminal 140" may include the exposure member 142' that passes through the exposure hole H of the sheet-type outer packaging material 130. The exposure member 142' may be exposed to the inside of the accommodation space S and electrically connected to the electrode tab 111 at one end portion (see the lower end portion in FIG. 9). The exposure member 142' may be exposed to the outside of the sheet-type outer packaging material 130 at the other end portion (see the upper end portion in FIG. 9). In this variation, the exposure hole H of the sheet-type outer packaging material 130 may expose the accommodation space S to the outside of the sheet-type outer packaging material 130. To this end, the exposure hole H may run through the sheet-type outer packaging material 130. The exposure member 142' may be disposed at the exposure hole H of the sheet-type outer packaging material 130 and exposed to the inside and outside of the secondary battery 100. The exposure member 142' may be disposed all over the exposure hole H.

Describing, the exposure member 142', the exposure member 142' may include a body portion 142a' disposed at the exposure hole H. The body portion 142a' may be extended in the direction perpendicular to the sheet-type outer packaging material 130 (in FIG. 9, the same as the height direction or the direction in which the electrodes of the electrode assembly are stacked). The term perpendicular as used herein may include generally perpendicular. The body portion 142a' extended as described above may include an inner end portion (see the lower end portion in FIG. 9) located at the inside of the accommodation space S (or exposed to the inside), and an outer end portion (see the upper end portion in FIG. 9) located at the outside of the sheet-type outer packaging material 130 (or exposed to the outside). The body portion 142a' may be a member formed in a corresponding shape to the cross-sectional shape of the exposure hole H and extended in the perpendicular direction as described above. However, the cross-sectional shape of the body portion 142a' is not limited thereto. For example, the cross-sectional shape of the body portion 142a' may be any cross-sectional shape such that the body portion 142a' may be disposed in the exposure hole H. For reference, as shown in FIG. 9, the body portion 142a' may include two members 142a1, 142a2 separately formed and coupled to each other.

The exposure member 142' may include an inner extension portion 142b1 extended from the inner end portion of the body portion 142a'. The inner end portion of the body portion 142a' may be an end portion of the body portion 142a' located at the inside of the sheet-type outer packaging material 130. The inner extension portion 142b1 may be extended to the outside of the exposure hole H in parallel to the sheet-type outer packaging material 130. For example, the inner extension portion 142b1 may be extended parallel to the sheet-type outer packaging material 130 inside of the sheet-type outer packaging material 130 (for example, the accommodation space) until it overlaps the resin layer 131b surrounding the exposure hole H. One surface of the inner extension portion 142b1 facing the inner surface of the sheet-type outer packaging material 130 may come into close contact with the inner surface of the sheet-type outer packaging material 130. The close contact may suppress leakage of the electrolyte solution from the inside of the secondary battery 100 to the outside of the secondary battery 100 through the exposure hole H. To prevent leakage of the electrolyte solution, a sealant layer (not shown) may be disposed between the inner extension portion 142b1 and the inner surface of the sheet-type outer packaging material 130 facing the inner extension portion 142b1.

The exposure member 142' may include an outer extension portion 142b2 extended from the outer end portion of the body portion 142a'. The outer end portion of the body portion 142a' may be an end portion of the body portion 142a' located at the outside of the sheet-type outer packaging material 130. The outer extension portion 142b2 may be extended to the outside of the exposure hole H in parallel to the sheet-type outer packaging material 130. For example, the outer extension portion 142b2 may be extended parallel to the sheet-type outer packaging material 130 outside of the sheet-type outer packaging material 130 until it overlaps the resin layer 131c surrounding the exposure hole H. One surface of the outer extension portion 142b2 facing the outer surface of the sheet-type outer packaging material 130 may come into close contact with the outer surface of the sheet-type outer packaging material 130. The close contact may suppress liquid infiltration into the secondary battery 100 from the outside of the secondary battery 100 through the exposure hole H. To prevent liquid infiltration, a sealant layer (not shown) may be disposed between the outer extension portion 142b2 and the outer surface of the sheet-type outer packaging material 130 facing the outer extension portion 142b2.

Meanwhile, the exposure member 142' may include an inner body portion 143, and an outer body portion 144 separably coupled to the inner body portion 143. FIG. 9 shows the inner body portion 143 and the outer body portion 144 interlocked with each other by a protrusion and a groove formed in the inner body portion 143 and the outer body portion 144, respectively. At least part of the inner body portion 143 may be exposed to the inside of the sheet-type outer packaging material 130 (for example, the accommodation space). At least part of the outer body portion 144 may be exposed to the outside of the sheet-type outer packaging material 130. The outer body portion 144 may be separately formed from the inner body portion 143. FIG. 9 shows the inner body portion 143 including a part 142a1 of the body portion 142a' and the inner extension portion 142b1, and the outer body portion 144 including the other part 142a2 of the body portion 142a' and the outer extension portion 142b2.

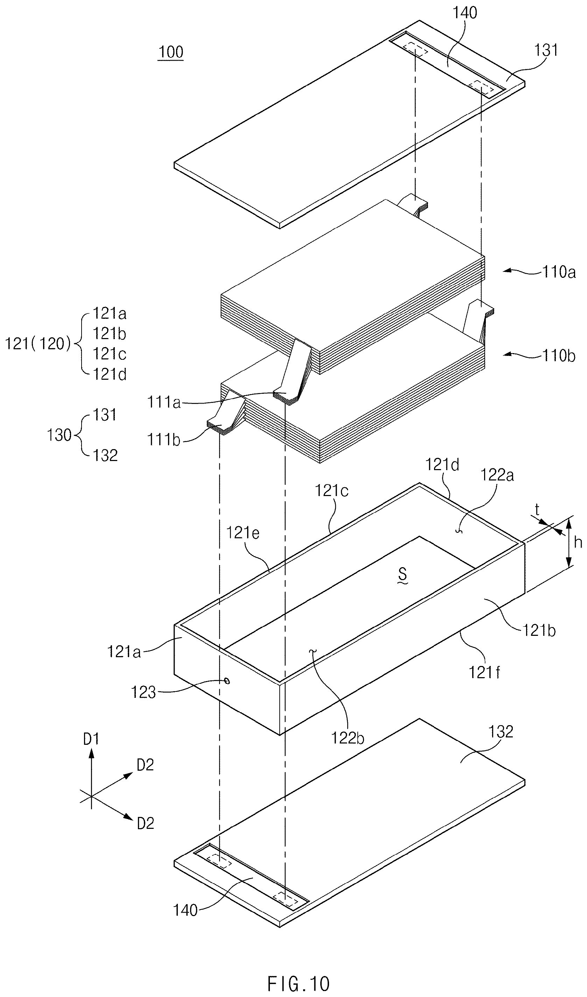

Meanwhile, the electrode assembly 110 may be modified as shown in FIG. 10. FIG. 10 is a perspective view showing a third variation of the secondary battery 100 of FIG. 2. The electrode assembly 110 may include a first electrode assembly 110a and a second electrode assembly 110b. The second electrode assembly 110b may be stacked on the first electrode assembly 110a. The first electrode tab 111a of the first electrode assembly 110a and the second electrode tab 111b of the second electrode assembly 110b having the same polarity as the first electrode tab 111a may be spaced apart from each other and coupled to the electrode terminal 140. For example, as shown in FIG. 10, the negative electrode tab 111a of the first electrode assembly 110a and the negative electrode tab 111b of the second electrode assembly 110b may be connected to the electrode terminal 140 of the lower outer packaging material 132 together, and may be respectively connected to two remote points of the electrode terminal 140.

After increasing the height (h) of the support frame 120, receiving a plurality of electrode assemblies in the accommodation space S may be considered, and when each of the electrode tabs of an electrode assembly and the electrode tabs of another electrode assembly is connected to the electrode terminal, the connection process between the electrode tabs and the electrode terminal may be easier than connecting all the electrode tabs of the electrode assemblies and then connecting them to the electrode terminal.

### Embodiment 2

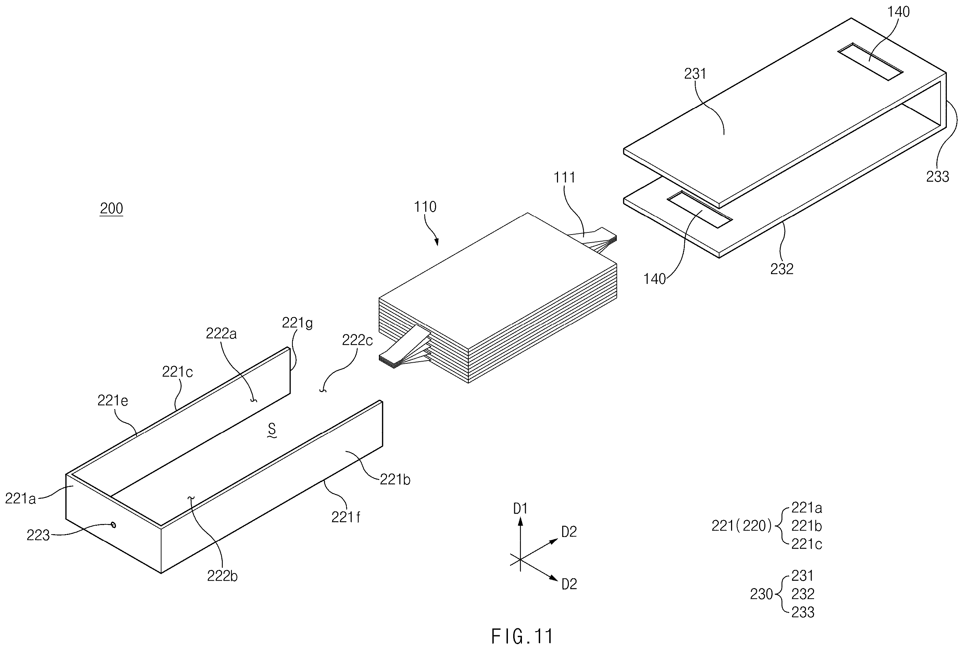

FIG. 11 is an exploded perspective view showing a secondary battery 200 according to Embodiment 2 of the present disclosure. The secondary battery 200 according to this embodiment is different from the secondary battery 100 of Embodiment 1 in the support frame and the sheet-type outer packaging material, and the following description will be made based on the difference. For reference, the description of Embodiment 2 may be equally applied to the above-described embodiment so long as there is no contradiction between them.

As shown in FIG. 11, the secondary battery 200 according to this embodiment may include the electrode assembly 110, the support frame 220, the sheet-type outer packaging material 230 and the electrode terminal 140.

The support frame 220 may include the support sidewall 221. When the direction in which the electrodes of the electrode assembly 110 are stacked is the height direction D1, and the direction perpendicular to the height direction D1 is the side direction D2, the support sidewall 221 may have an upper opening 222a along the height direction D1 and a side opening 222c along the side direction D2. The support sidewall 221 may be formed in a C shape as a whole. The support sidewall 221 may have a lower opening 222b corresponding to the upper opening 222a. The support sidewall 221 may surround some of the sides of the electrode assembly 110. The sides of the electrode assembly 110 may be defined along the side direction D2. In FIG. 11, among four sides of the electrode assembly 110, three sides are surrounded by the support sidewalls 221; 221a, 221b, 221c. The support frame 220 may have the electrolyte solution injection hole 223 in one surface 221a.

The sheet-type outer packaging material 230 may include the outer packaging sheets 231, 233 covering the upper opening 222a and the side opening 222c formed by the support sidewall 221. When the support sidewall 221 also has the lower opening 222b, the outer packaging sheet 232 may also cover the lower opening 222b. FIG. 11 shows the outer packaging sheets 231, 232, 233 continuously covering the upper opening 222a, the side opening 222c and the lower opening 222b. That is, the outer packaging sheet 231 for covering the upper opening 222a, the outer packaging sheet 233 for covering the side opening 222c and the outer packaging sheet 232 for covering the lower opening 222b may be continuously connected to form a C shape as a whole. The outer packaging sheets 231, 232, 233 may be coupled to the support sidewall 221. The outer packaging sheets 231, 232, 233 may be coupled to the upper surface 221e and the lower surface 221f of the support sidewall 221 defined along the height direction D1, and the side 221g of the support sidewall 221 defined at the side opening 222c side along the side direction D2.

The foregoing description has been made to describe the technical aspect of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspect of the present disclosure and not intended to be limiting, and the technical scope of the present disclosure is not limited by these embodiments.

The scope of protection of the present disclosure should be interpreted by the appended claims, and it should be interpreted that all the technical spirit within the equivalent scope is included in the scope of protection of the present disclosure.

## Claims

1. A secondary battery comprising:
an electrode assembly;
a support frame surrounding a part of the electrode assembly;
a sheet-type outer packaging material surrounding a remaining part of the electrode assembly to form an accommodation space accommodating the electrode assembly together with the support frame, and coupled to the support frame to define the accommodation space from outside of the support frame; and
an electrode terminal electrically connected to an electrode tab of the electrode assembly, and disposed in the sheet-type outer packaging material such that it is exposed to outside of the sheet-type outer packaging material.

2. The secondary battery according to claim 1,
wherein the support frame includes:
when a direction in which electrodes of the electrode assembly are stacked is a height direction, and a direction perpendicular to the height direction is a side direction,
a support sidewall having an upper opening along the height direction, and surrounding all sides of the electrode assembly defined along the side direction, and
wherein the sheet-type outer packaging material includes:
an outer packaging sheet coupled to an upper surface of the support sidewall defined along the height direction, to cover the upper opening formed by the support sidewall.

3. The secondary battery according to claim 1,
wherein the support frame includes:
when a direction in which electrodes of the electrode assembly are stacked is a height direction, and a direction perpendicular to the height direction is a side direction,
a support sidewall formed in a C shape that forms an upper opening along the height direction and a side opening along the side direction, and surrounding some of sides of the electrode assembly defined along the side direction, and
wherein the sheet-type outer packaging material includes:
an outer packaging sheet coupled to the support sidewall, and covering the upper opening and the side opening formed by the support sidewall.

4. The secondary battery according to claim 1,
wherein the support frame is formed from a plastic material, and
wherein the sheet-type outer packaging material includes a metal layer, and a resin layer disposed on an inner surface of the metal layer and bonded to the support frame.

5. The secondary battery according to claim 1,
wherein the support frame is formed from a metal material, and
wherein the sheet-type outer packaging material includes a metal layer, and a resin layer disposed on an inner surface of the metal layer and coupled to the support frame.

6. The secondary battery according to claim 5,
wherein a surface of the support frame coupled with the sheet-type outer packaging material is surface-treated to improve coupling with the sheet-type outer packaging material.

7. The secondary battery according to claim 1,
wherein the support frame is formed from a metal material, and
wherein the sheet-type outer packaging material includes a metal layer coupled to the support frame by welding.

8. The secondary battery according to claim 1, further comprising:
an adhesive disposed between the support frame and the sheet-type outer packaging material to stick the support frame and the sheet-type outer packaging material together.

9. The secondary battery according to claim 1,
wherein the electrode terminal includes:
a terminal metal layer which is a part of a metal layer of the sheet-type outer packaging material, and having an inner surface exposed to inside of the accommodation space and electrically connected to the electrode tab, and an outer surface exposed to outside of the sheet-type outer packaging material.

10. The secondary battery according to claim 9,
wherein the terminal metal layer is disposed on a surface of the sheet-type outer packaging material covering an upper surface or a lower surface of the electrode assembly defined along a height direction which is a direction in which electrodes of the electrode assembly are stacked, and does not overlap the electrode assembly when projected in the height direction.

11. The secondary battery according to claim 9,
wherein the sheet-type outer packaging material includes:
the metal layer, and a resin layer covering at least one surface of the inner surface or the outer surface of the metal layer, but not covering the terminal metal layer.

12. The secondary battery according to claim 1,
wherein the electrode terminal includes:
a terminal metal layer which is a part of a metal layer of the sheet-type outer packaging material, and having an inner surface exposed to inside of the accommodation space and electrically connected to the electrode tab; and
an exposure member electrically connected to the terminal metal layer, disposed on an outer surface of the terminal metal layer and exposed to outside of the sheet-type outer packaging material.

13. The secondary battery according to claim 12,
wherein the sheet-type outer packaging material includes:
the metal layer, and a resin layer covering the outer surface of the metal layer, but not covering the terminal metal layer to form an exposure hole through which the terminal metal layer is exposed to the outside of the sheet-type outer packaging material, and
wherein the exposure member includes:
a connection portion disposed at the exposure hole and electrically connected to the terminal metal layer, and an extension portion extended from the connection portion in parallel to the sheet-type outer packaging material outside of the sheet-type outer packaging material, and overlapping the resin layer surrounding the exposure hole.

14. The secondary battery according to claim 1,
wherein the sheet-type outer packaging material includes:
an exposure hole through which the accommodation space is exposed to outside of the sheet-type outer packaging material, and
wherein the electrode terminal includes:
an exposure member passing through the exposure hole, and having an end portion exposed to inside of the accommodation space and electrically connected to the electrode tab, and an opposite end portion exposed to outside of the sheet-type outer packaging material.

15. The secondary battery according to claim 14,
wherein the exposure member includes:
a body portion extended in a direction perpendicular to the sheet-type outer packaging material and disposed at the exposure hole;
an inner extension portion extended from an inner end portion located inside of the sheet-type outer packaging material among two end portions of the body portion to outside of the exposure hole in parallel to the sheet-type outer packaging material; and
an outer extension portion extended from an outer end portion located outside of the sheet-type outer packaging material among the two end portions of the body portion to outside of the exposure hole in parallel to the sheet-type outer packaging material.

16. The secondary battery according to claim 15,
wherein a sealant layer is disposed in at least one of between the inner extension portion and an inner surface of the sheet-type outer packaging material facing the inner extension portion, and between the outer extension portion and an outer surface of the sheet-type outer packaging material facing the outer extension portion.

17. The secondary battery according to claim 14,
wherein the exposure member includes:
an inner body portion, at least part of which is exposed to the inside of the accommodation space; and
an outer body portion separately formed from the inner body portion and separably coupled to the inner body portion, wherein at least part of the outer body portion is exposed to the outside of the sheet-type outer packaging material.

18. The secondary battery according to claim 1,
wherein the electrode assembly includes:
a first electrode assembly, and a second electrode assembly stacked on the first electrode assembly, and
wherein a first electrode tab of the first electrode assembly and a second electrode tab of the second electrode assembly having a same polarity as the first electrode tab are spaced apart from each other and coupled to the electrode terminal.
